# EUROPÄISCHE PATENTSCHRIFT

(11) **EP 0 607 610 B1**
(45) Veröffentlichungstag und Bekanntmachung des Hinweises auf die Patenterteilung: **11.09.1996**
(21) Anmeldenummer: 93120900.1
(22) Anmeldetag: 24.12.1993
(51) Int. Cl.: B21D 53/10, F16C 11/06

(54) **Kugelgelenk und Arbeitsverfahren zu seiner Herstellung**
Ball-joint and method of its manufacture
Articulation à rotule et procédé pour sa fabrication

(30) Priorität: 20.01.1993 DE 4301303
(43) Veröffentlichungstag der Anmeldung: 27.07.1994
(73) Patentinhaber: LEMFOERDER METALLWAREN AG., D-49441 Lemförde (DE)
(72) Erfinder: Ersoy, Metin, Dr., D-65396 Walluf (DE); Meyer, Klemens, D-49441 Lemförde (DE); Zeibig, Uwe, D-77871 Rechen (DE); Mählmann, Dirk, D-49080 Osnabrück (DE); Westphal, Paul, D-3251 Stemwede (DE)
(74) Vertreter: Bruse, Willy Hans Heinrich

(56) Entgegenhaltungen:
- DD-A- 130 106
- DE-A- 3 009 456
- DE-A- 3 219 175
- US-A- 3 221 391
- US-A- 3 988 818
- US-A- 4 028 784
- US-A- 4 714 262

## Beschreibung

Die Erfindung bezieht sich auf die Herstellung eines Kugelenkes nach dem Oberbegriff des Patentanspruches 1.

Ein solches Herstellungsverfahren ist aus der US-A-3 988 818 bekannt. Zur Herstellung eines aus der DD-A-130 106 bekannten Gelenkes wird ein Rohrabschnitt in Achsrichtung gestaucht, um eine Umfangsfalte am Rohrmantel zu bilden. Danach wird ein Rohrende radial nach innen umgebördelt, so daß die Innenteile des Gelenks eingesetzt und das andere Rohrende an dem Kugelkopf durch axialen Druck angeformt werden können.

Ergänzend zu diesem Stand der Technik ist aus der DE 30 09 456 ein Kugelgelenk bekannt, dessen Gehäuse aus mehreren Blechteilen durch umformende, spanlose Bearbeitung hergestellt ist. Die einzelnen Teile werden hierbei unlösbar durch eine geschlossene Ringwulstschweißung verbunden und zum anderen durch eine Vielzahl von Klammern arretiert. Neben diesen Montagearbeiten ist zur Herstellung des Gelenkes ein schmaler Ring notwendig, der eine Zentrierfunktion für die Gehäuseteile übernimmt.

Der Erfindung liegt die Aufgabe zugrunde, ein spanloses Verfahren zur kostengünstigen Herstellung eines Kugelgelenkes mit einem einteiligen Gehäuse und einem sich daran anschließenden Gehäuseschaft zu schaffen, dessen Gehäuse einteilig und spanlos hergestellt werden kann. Das Ziel besteht somit in der Entwicklung eines leicht ausführbaren Verfahrens zur Herstellung eines Kugelgelenkes mit einem Blechgehäuse und den eingangs genannten Ausbildungsmerkmalen.

Die Aufgabe wird durch Blechumformung im Tiefziehverfahren in mehreren aufeinanderfolgenden Arbeitsgängen mit einem Herstellungsverfahren nach dem Patentanspruch 1 gelöst.

Hierfür wird in das zugeschnittene Gehäuseblech zunächst das zylindrische Gehäuseteil zur Aufnahme der Lagerschale und des Kugelzapfens eingeprägt. Im Anschluß daran erfolgt die Bördelung des Gehäuseschaftes, wobei in einem Arbeitsgang vorteilhaft auch der Gehäuseschaft mit einem Gewinde am freien Ende des Gehäuseschaftes in seiner endgültigen Form geprägt wird. Das Gewinde entsteht in an sich bekannter Weise durch ein Walzverfahren. Die Materialverformungen im Boden- und Deckelbereich des Gelenkgehäuses, wozu auch die Nut zur Anlage des Dichtungsbalges zu rechnen ist, werden nach dem Tiefziehvorgang durch Walzverformung des Materials erreicht.

Da für die Herstellung des Kugelgelenkgehäuses ein weicher, vorzugsweise metallischer Werkstoff verwendet wird, sind eventuell konstruktive Maßnahmen der Stabilitätserhöhung notwendig. So sind vorteilhaft im Übergangsbereich zwischen dem Aufnahmebereich des Kugelzapfens und dem Schaft in der Aufsicht seitliche Auskragungen als Versteifungsrippen angeformt. Der Gehäuseschaft weist vorteilhaft ein im Querschnitt U-förmiges Profil auf. Es sind auch andere, zum Beispiel kreisförmige oder dreieckige Querschnittsgeometrien möglich. Die Länge des Schaftes richtet sich nach dem jeweiligen Einsatzzweck des Kugelgelenkes. Die Montage der Einzelteile weist als Besonderheit die Anbringung des Gehäusedeckels auf. Dieser wird zunächst in die dafür am Innenumfang des Gehäuses vorgesehene Nut eingelegt. Er befindet sich in unmittelbarem Kontakt zur Lagerschale, da er diese in ihrer Lage fixiert. Mittels eines keilförmigen Werkzeuges erfolgt im Anschluß daran eine Einkerbung des deckelseitigen, während des Umformvorganges herausgearbeiteten Randwulstes am Gehäuse, mit einer nachfolgenden Arretierung des Gehäusedeckels durch Materialverformung des gekerbten Werkstoffes.

Als Ausführungsbeispiel ist ein Kugelgelenk einer Spurstange für Kraftfahrzeuge in der Zeichnung dargestellt. Es zeigen:
- Figur 1: eine Seitenansicht eines Spurstangengelenks für Kraftfahrzeuge mit teilweisen Schnittsegmenten,
- Figur 2: einen Schnitt nach der Linie II - II gemäß Figur 1 und
- Figur 3: eine Draufsicht auf die in Figur 1 gezeigte Spurstange.

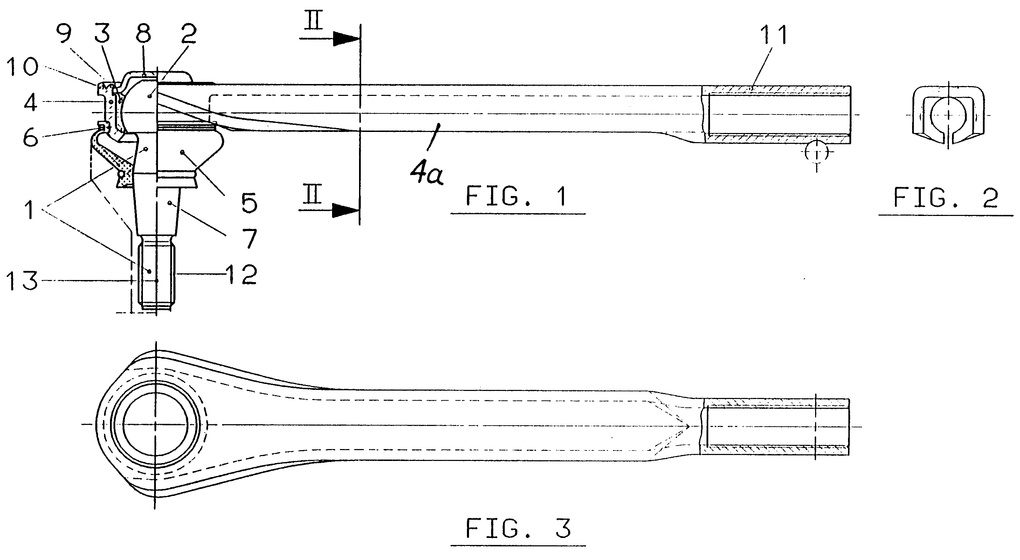

Die in Figur 1 gezeigte Ausführungsform einer Spurstange für Kraftfahrzeuge besteht aus einem Kugelzapfen 1, der mit einer einstückig mit diesem verbundenen Gelenkkugel 2 in einer Lagerschale 3 allseitig beweglich gelagert ist, und aus einem Kugelgelenkgehäuse 4, welches die Lagerschale in einem tassenförmigen Bereich aufnimmt und einen sich seitlich erstreckenden Gehäuseschaft 4a aufweist. An die Gelenkkugel 2 des Kugelzapfens 1 schließt sich ein Schaft 7 und an diesen ein Gewinde 12 zum Anschluß im Kraftfahrzeug an. Der Kugelzapfen tritt einseitig aus dem Kugelgelenkgehäuse 4 heraus. Um eine sichere Lagefixierung der vorzugsweise aus Kunststoff hergestellten Lagerschale 3 zu gewährleisten, wird das Kugelgelenkgehäuse 4 an der Austrittsseite des Kugelzapfen-Schaftes 7 in Richtung zur Mittelachse 13 des Kugelzapfens 1 hin verformt. Der Verschluß des Gehäuses erfolgt mittels eines Gehäusedeckels 8, der zudem der Sicherung der Lagerschale gegen axiale Verschiebung dient. Der Gehäusedeckel wird durch eine Materialverformung 9 des Randwulstes 10 im Gehäuse arretiert. Hierfür wird ein keilförmiges Werkzeug verwendet, um die Randwulst zumindest teilweise in radialer Richtung zu spalten. Der radial innere Bereich des angekerbten Werkstoffes wird im Anschluß daran so verformt, daß der Gehäusedeckel 8 am Kugelgelenkgehäuse festgesetzt wird. Ein Dichtungsbalg 5 liegt gehäuseseitig dichtend in einer Ringnut 6 am Außenumfang des Gehäuses. Diese Ringnut entsteht erfindungsgemäß entweder während des Tiefziehvorganges, oder im unmittelbaren Anschluß daran durch einen Walzprozeß. Die entgegengesetzte Dichtungsbalgseite dichtet am Schaft 7 des Kugelzapfens in an sich bekannter Weise ab. Der Gehäuseschaft 4a weist am freien Ende ein Gewinde 11 auf.

In Figur 2 wird ersichtlich, wie der Gehäuseschaft 4a gestaltet ist. Das Innengewinde kann entsprechend den jeweiligen Bauteilanforderungen auch durch ein Außengewinde ersetzt werden. Jede geometrisch sinnvolle Gestaltung des Querschnittes ist möglich. Das Gewinde kann durch ein Walzverfahren oder durch ein Schnittverfahren eingebracht werden.

In der Figur 3 ist das in Figur 1 dargestellte Spurstangengelenk für Kraftfahrzeuge noch einmal in der Draufsicht dargestellt.

### BEZUGSZEICHENLISTE:

- 1: Kugelzapfen
- 2: Gelenkkugel
- 3: Lagerschale
- 4: Kugelgelenkgehäuse
- 4a: Gehäuseschaft
- 5: Dichtungsbalg
- 6: Ringnut
- 7: Schaft
- 8: Gehäusedeckel
- 9: Materialverformung
- 10: Randwulst
- 11: Gewinde
- 12: Gewinde
- 13: Mittelachse

## Patentansprüche

1. Herstellung eines Kugelgelenkes mit einem Kugelgelenkgehäuse (4) aus Blech, welches eine Lagerschale (3) für die allseitig bewegliche Lagerung der Gelenkkugel (2) eines Kugelzapfens (1) aufnimmt und einen Gehäuseschaft (4a) zur Befestigung aufweist, wobei das Kugelgelenkgehäuse (4) ringförmig geschlossen und mit dem Gehäuseschaft (4a) spanlos mittels Blechumformung hergestellt ist, und wobei das Kugelgelenkgehäuse (4) einseitig verschlossen und mit einem Dichtungsbalg (5) verbindbar ist, der an dem Kugelzapfen (1) befestigt ist, dadurch gekennzeichnet, daß bei der Blechumformung in einem Tiefziehvorgand und einer anschließenden Walzverformung aus einem zugeschnittenen Gehäuseblech, einstückig mit dem Gehäuseschaft (4A), ein zylindrisches Gehäuseteil (4) zur Aufnahme der Lagerschale und des Kugelzapfens sowie durch Materialverschiebung im deckelseitigen Bereich des Gehäuses (4) eine verstärkte Randwulst (10) gebildet wird, die den Durchmesser des Kugelgelenkgehäuses nach außen erweitert , wobei ein keilförmiges Werkzeug diese Randwulst (10) nach Einlage eines Gehäusedeckels (8) wenigstens teilweise spaltet und im Anschluß daran ein Umformvorgang des abgespaltenen Materials den Gehäusedeckel (8) festsetzt.

2. Herstellungsverfahren nach Anspruch 1, dadurch gekennzeichnet, daß eine Gehäusenut (6) am Außenumfang des zylindrischen Gehäuseteils (4) für die Verbindung mit dem Dichtungsbalg ebenfalls spanlos im Blechumformverfahren in das Kugelgelenkgehäuse eingearbeitet ist.

3. Herstellungsverfahren nach den Ansprüchen 1 oder 2, dadurch gekennzeichnet, daß der Gehäuseschaft (4a) im Anschlußbereich an das Kugelgelenkgehäuse (4) im Querschnitt ein von der Rohrform abweichendes, einseitig offenes Profil aufweist.

4. Herstellungsverfahren nach einem der Ansprüche 1 bis 3, dadurch gekennzeichnet, daß der Gehäuseschaft (4a) im Anschlußbereich an das Kugelgelenkgehäuse (4) ein mehrseitig offenes Profil ist.

5. Herstellungsverfahren nach einem der Ansprüche 1 bis 4, dadurch gekennzeichnet, daß der Gehäuseschaft (4a) am freien Ende ein Innengewinde (11) aufweist.

6. Herstellungsverfahren nach einem der Ansprüche 1 bis 5, dadurch gekennzeichnet, daß der Gehäuseschaft (4a) am freien Ende ein Außengewinde aufweist.

## Claims

1. Production of a ball joint with a ball joint housing (4) from sheet metal which accommodates a bearing shell (3) for the polydirectionally movable bedding of the joint ball (2) of a ball journal (1) and comprises a housing shaft (4a) for the purpose of mounting, the ball joint housing (4) being closed in the form of a ring and produced together with the housing shaft (4a), without cutting, by means of sheet-metal forming, and the ball joint housing (4) being occluded on one side and capable of being coupled to a sealing bellows (5) which is fixed to the ball journal (1), characterized in that, in the sheet-metal forming, from a housing sheet which is cut to size and in a deep-drawing process and a consecutive roll forming there is formed, as a single piece with the housing shaft (4a), a cylindrical housing part (4) for accommodating the bearing shell and the ball journal and, through displacement of material in the region of the housing (4) at the cover side, a raised edge bead (10) which extends the diameter of the ball joint housing outwards, a wedge-shaped tool at least partially dividing this edge bead (10) following insertion of a housing cover (8) and, subsequent to this, a process of forming of the divided material fixing the housing cover (8) in position.

2. Production method according to Claim 1, characterized in that a housing groove (6) is worked, likewise without cutting, in the sheet-metal forming method, into the ball joint housing, on the outer circumference of the cylindrical housing part (4), for the coupling with the sealing bellows.

3. Production method according to either of Claims 1 or 2, characterized in that, in the region of joining with the ball joint housing (4), the housing shaft (4a) has a profile which differs in cross-section from the tubular form and is open on one side.

4. Production method according to any one of Claims 1 to 3, characterized in that, in the region of joining with the ball joint housing (4), the housing shaft (4a) is profile which is open on multiple sides.

5. Production method according to any one of Claims 1 to 4, characterized in that the housing shaft (4a) has an internal thread (11) on the free end.

6. Production method according to any one of Claims 1 to 5, characterized in that the housing shaft (4a) has an external thread on the free end.

## Revendications

1. Procédé de fabrication d'une articulation à rotule comprenant un boîtier (4) de l'articulation à rotule réalisé en tôle, qui reçoit une coquille de support (3) pour le montage mobile dans toutes les directions de la rotule d'articulation (2) d'un tourillon à rotule (1), et qui présente une tige de boîtier (4a) pour la fixation, le boîtier (4) de l'articulation à rotule étant fermé de manière annulaire et étant fabriqué avec la tige de boîtier (4a) sans enlèvement de copeaux au moyen d'un formage de tôle, le boîtier (4) de l'articulation à rotule étant fermé d'un côté et pouvant être relié à un soufflet d'étanchéité (5) qui est fixé au tourillon à rotule (1), caractérisé en ce que, lors du formage de tôle, dans une étape d'emboutissage et par la suite une étape de formage par laminage, à partir d'une tôle de boîtier découpée, d'une seule pièce avec la tige de boîtier (4a), un élément de boîtier (4) cylindrique pour la réception de la coupelle de support et du tourillon à rotule est formé, ainsi qu'un boudin périphérique (10) renforcé par déplacement de matériau dans la zone du boîtier (4) du côté du couvercle, boudin périphérique qui élargit vers l'extérieur le diamètre du boîtier de l'articulation à rotule, un outil en forme de coin fendant, après insertion d'un couvercle de boîtier (8), au moins partiellement ce boudin périphérique (10), et suite à cela, une étape de formage du matériau fendu sertit le couvercle de boîtier (8).

2. Procédé de fabrication selon la revendication 1, caractérisé en ce qu'une rainure de boîtier (6) est usinée également sans enlèvement de copeaux dans un procédé de formage de tôle sur le pourtour extérieur de l'élément de boîtier (4) cylindrique pour la liaison avec le soufflet d'étanchéité.

3. Procédé de fabrication selon la revendication 1 ou 2, caractérisé en ce que la tige (4a) de boîtier présente dans la zone se raccordant au boîtier (4) de l'articulation à rotule, en coupe transversale, un profil différent de la forme d'un tube, ouvert d'un côté.

4. Procédé de fabrication selon l'une quelconque des revendications 1 à 3, caractérisé en ce que dans la zone se raccordant au boîtier (4) de l'articulation à rotule, la tige de boîtier (4a) est un profil ouvert de plusieurs côtés.

5. Procédé de fabrication selon l'une quelconque des revendications 1 à 4, caractérisé en ce que la tige du boîtier (4a) présente à l'extrémité libre un taraudage (11).

6. Procédé de fabrication selon l'une quelconque des revendications 1 à 5, caractérisé en ce que la tige du boîtier (4a) présente à l'extrémité libre un filetage extérieur.
